# EUROPÄISCHE PATENTSCHRIFT

(11) **EP 0 962 671 B1**
(45) Veröffentlichungstag und Bekanntmachung des Hinweises auf die Patenterteilung: **14.07.2004**
(21) Anmeldenummer: 99108113.4
(22) Anmeldetag: 24.04.1999
(51) Int. Cl.: F16C 17/10

(54) **Gebaute Bundlagerschale**
Axial/radial composite bearing
Palier composé axial-radial

(30) Priorität: 05.06.1998 DE 19825117
(43) Veröffentlichungstag der Anmeldung: 08.12.1999
(73) Patentinhaber: KS Gleitlager GmbH, 68789 St. Leon-Rot (DE)
(72) Erfinder: Bickle, Wolfgang, 68799 Reilingen (DE); Schubert, Werner, 69168 Wiesloch (DE)
(74) Vertreter: Dreiss, Fuhlendorf, Steimle & Becker

(56) Entgegenhaltungen:
- DE-C- 4 225 000
- FR-A- 2 540 580

## Beschreibung

Die Erfindung betrifft eine gebaute Bundlagerschale mit einem halbschalenförmigen Radiallagerteil und einem an einem axialen Randabschnitt des Radiallagerteils einseitig befestigbaren teilringscheibenförmigen Axiallagerteil oder mit beidseits befestigbaren teilringscheibenförmigen Axiallagerteilen, wobei jedes Axiallagerteil in radialer Ebene des Radiallagerteils nach innen vorspringende Haltezungen aufweist, die mit radialen Halteausnehmungen in dem axialen Randabschnitt des Radiallagerteils in Eingriff bringbar sind, wobei wenigstens zwei Halteausnehmungen als allseits umschlossene Halteöffnungen oder so ausgebildet sind, dass sich die Haltezungen nicht in axialer Richtung in die Halteausnehmungen einführen lassen.

Gebaute Bundlagerschalen mit allseits umschlossenen Halteöffnungen in dem Radiallagerteil sind beispielsweise aus der DE 41 40 277 C2 bekannt. In dieser Druckschrift ist darauf hingewiesen, dass die Halteöffnungen in Umfangsrichtung des Radiallagerteils größer bemessen sein müssen als die Umfangslänge einer zugeordneten Haltezunge, um das Axiallagerteil und das Radiallagerteil zusammenstecken zu können. Je weiter die Haltezungen vom Scheitel der Bundlagerschale entfernt angeordnet sind, desto größer muss die Umfangslänge der korrespondierenden Halteöffnungen gewählt werden. Es ergibt sich im montierten Zustand ein dementsprechend mehr oder weniger großes umfängliches Spiel.

Hiervon ausgehend liegt der vorliegenden Erfindung die Aufgabe zugrunde, eine gebaute Bundlagerschale der eingangs beschriebenen Art dahingehend zu verbessern, dass die Anordnung der Haltezungen bzw. der Halteöffnungen relativ zum Scheitelpunkt und das in Umfangsrichtung vorzusehende Spiel unabhängig voneinander sind, so dass das Axiallagerteil in Umfangsrichtung auch im wesentlichen spielfrei am Radiallagerteil angebracht werden kann.

Diese Aufgabe wird bei einer gebauten Bundlagerschale der eingangs beschriebenen Art erfindungsgemäß dadurch gelöst, dass die wenigstens zwei Halteausnehmungen in konzentrischer Umfangsrichtung des Radiallagerteils im wesentlichen dieselbe Länge aufweisen wie die Haltezungen und die Haltezungen in radialer Richtung durch den Scheitelpunkt der Bundlagerschale oder parallel hierzu betrachtet hinterschnittfrei ausgebildet sind.

Dies bedeutet, dass sich die Haltezungen nicht streng radial nach innen erstrecken, sondern in radial durch den Scheitelpunkt verlaufender Fügerichtung von Axiallagerteil und Radiallagerteil parallel zueinander. Dies eröffnet die Möglichkeit, die beiden Teile verkippungsfrei zusammenstecken zu können, ohne dass hierfür ein der Anordnung und Ausbildung der Haltezungen entsprechendes Spiel in Umfangsrichtung in Kauf genommen werden müsste.

Um eine flächenhafte Führung und Anlage der beiden Teile aneinander zu erreichen, erweist es sich als vorteilhaft, wenn die Halteausnehmungen in Umfangsrichtung von Wandbereichen des Radiallagerteils begrenzt werden, die parallel zueinander bzw. zur Fügerichtung verlaufen.

Die Halteausnehmungen werden in bevorzugter Weise in einem Winkel von 25 bis 45°, insbesondere von 25 bis 35°, zur Scheitellinie des Radiallagerteils angeordnet.

Um Axiallagerteil und Radiallagerteil unlösbar bzw. unverlierbar aneinander zu halten, wird vorgeschlagen, dass zumindest eine der Haltezungen auf ihrer axial äußeren Seite eine Vertiefung, eine Kerbung oder eine in axialer Richtung durchgehende Öffnung aufweist und dass nach dem Aneinanderfügen von Radiallagerteil und Axiallagerteil ein die betreffende Halteöffnung axial begrenzender Stegabschnitt des Radiallagerteils in die Vertiefung, Kerbung bzw. Öffnung hineindeformiert ist. Der Stegabschnitt wird vorzugsweise so dimensioniert, dass er sich möglichst widerstandslos deformieren lässt, aber gleichwohl eine sichere formschlüssige und/oder reibschlüssige Verbindung der Haltezunge des Axiallagerteils mit dem Radiallagerteil gewährleistet.

Weitere Merkmale, Einzelheiten und Vorteile der Erfindung ergeben sich aus der zeichnerischen Darstellung und nachfolgenden Beschreibung bevorzugter Ausführungsformen der erfindungsgemäßen Bundlagerschale. In der Zeichnung zeigt:
- Figur 1: eine Draufsicht auf ein Radiallagerteil einer erfindungsgemäßen Bundlagerschale;
- Figur 2: eine Ansicht eines Axiallagerteils und des Radiallagerteils nach Figur 1;
- Figur 3: eine ausschnittsweise Schnittansicht der zusammengesetzten Bundlagerschale gesehen in Richtung der Pfeile III-III in Figur 2;
- Figur 4: eine ausschnittsweise Ansicht des Scheitelbereichs der zusammengesetzten Bundlagerschale in Richtung des Pfeils IV in Figur 3;
- Figur 5: eine der Figur 4 entsprechende Ansicht einer zweiten Ausführungsform der erfindungsgemäßen Bundlagerschale;
- Figur 6: eine Schnittansicht des Axiallagerteils nach Figur 2, gesehen in Richtung der Pfeile VI-VI in Figur 2;
- Figur 7: eine der Figur 2 entsprechende Ansicht eines Axiallagerteils nach einer weiteren Ausführungsform der erfindungsgemäßen Bundlagerschale; und
- Figur 8: eine der Figur 5 entsprechende Darstellung der Bundlagerschale nach der weiteren Ausführungsform.

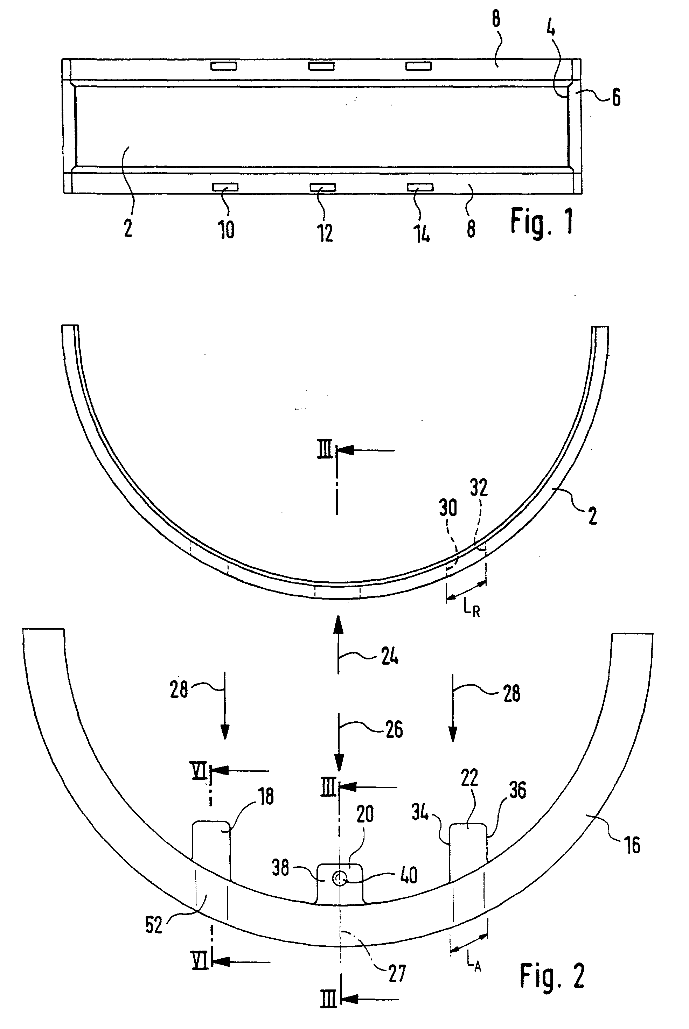

Figur 1 zeigt ein Radiallagerteil 2 zur Herstellung einer gebauten Bundlagerschale. Das Radiallagerteil 2, das in der seitenansicht in Figur 2 dargestellt ist, umfasst eine Lauf- oder Gleitschicht 4, die auf eine Stützschicht 6 aus Stahl aufplattiert ist. An axialen Randabschnitten 8 ist die Gleitschicht 4 abgenommen. Dort sind beidseits radiale Halteausnehmungen 10, 12, 14 in Form allseits umschlossener Halteöffnungen vorgesehen, um ein in Figur 2 dargestelltes Axiallagerteil 16 in Form einer Anlaufscheibe am Radiallagerteil 2 befestigen zu können.

Am Axiallagerteil 16 sind nach innen vorspringende Haltezungen 18, 20, 22 durch Prägen und Stanzen geformt. Die Haltezungen 18, 20, 22 erstrecken sich nicht streng in radialer Richtung, sondern sie verlaufen entlang oder parallel zur Fügerichtung von Axiallagerteil und Radiallagerteil, die mit dem Pfeil 24 angedeutet ist. Die Haltezungen 18, 20, 22 sind ferner so ausgebildet, dass sie in radialer Richtung 26 durch den Scheitelpunkt 27 der Bundlagerschale oder parallel hierzu betrachtet (Pfeile 28) hinterschnittfrei verlaufen. Daher kann die Länge L_{R} der Halteausnehmungen 10, 12, 14 in konzentrischer Umfangsrichtung im wesentlichen der Länge L_{A} der Haltezungen 18, 20, 22 entsprechen, so dass erwünschtenfalls Spielfreiheit erreicht werden kann.

Im dargestellten Fall werden die Halteausnehmungen 10, 12, 14 von parallel zueinander und zur Fügerichtung 24 verlaufenden Wandbereichen 30 und 32 begrenzt. Die wandbereiche 30 und 32 und die Umfangsflanken 34, 36 der Haltezungen 18, 20, 22 verlaufen ebenfalls vorzugsweise parallel, um eine flächenhafte Anlage aneinander zu gewährleisten.

Wie aus den Figuren 2 und 4 ersichtlich ist, weist die im Scheitel vorgesehene Haltezunge 20 auf ihrer axial äußeren Seite 38 eine Vertiefung 40 auf. In diese Vertiefung 40 ist ein die Halteausnehmung 12 axial begrenzender Stegabschnitt 42 durch verhältnismäßig geringfügige Kerbwirkung in Richtung des Pfeils 44 hineindeformiert. Das Axiallagerteil 16 ist somit unlösbar am Radiallagerteil 2 gehalten.

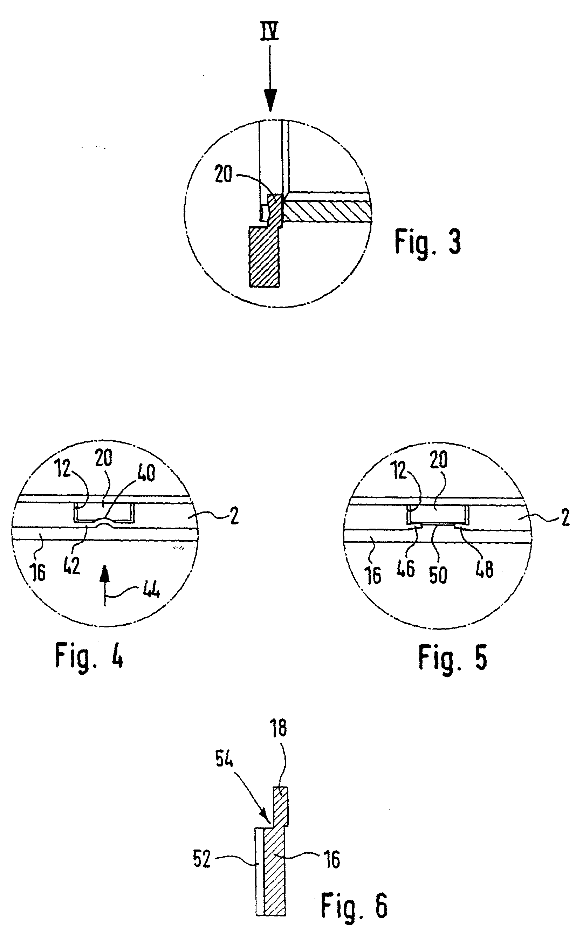

Figur 5 zeigt eine weitere Ausführungsform, wonach die Halteausnehmung 12 nicht allseits umschlossen ausgebildet ist, sondern axial durch zwei in Umfangsrichtung erstreckte Stegabschnitte 46, 48 begrenzt wird, die nach dem Zusammenstecken von Axiallagerteil und Radiallagerteil in Richtung auf die Haltezunge 20 gebogen sind. Die Haltezunge 20 weist in diesem Fall eine querverlaufende Vertiefung 50 auf, in welche die freien Enden der abgebogenen Stegabschnitte 46, 48 eingreifen.

Schließlich zeigt Figur 6 eine Schnittansicht des Axiallagerteils 16 im Bereich der Haltezunge 18. Man erkennt einen gestrehlten Bereich 52, der auch in Figur 2 angedeutet ist. In vorteilhafter Weise lässt sich in einem Arbeitsgang sowohl der gestrehlte Bereich 52 als auch die Materialabnahme im Bereich 54 der jeweiligen Haltezunge 18 durchführen.

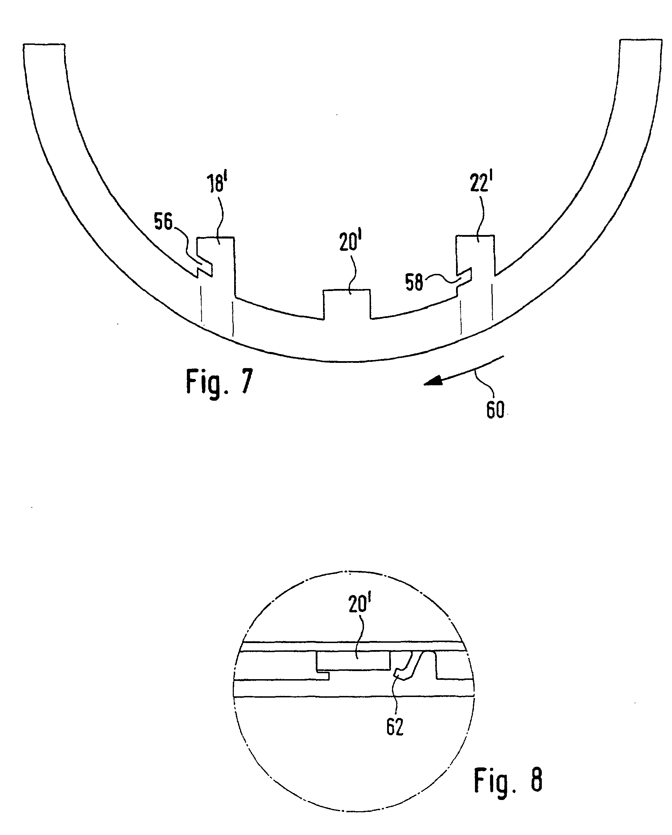

Figur 7 zeigt eine weitere Ausführungsform einer erfindungsgemäßen Bundlagerschale, bei der die Haltezungen 18', 22' eine in konzentrischer Umfangsrichtung erstreckte randoffene maulförmige Aussparung 56, 58 aufweisen. Nach dem Fügen des Axiallagerteils an das Radiallagerteil kann das erstere mit seinen Haltezungen 18', 22' in eine Hintergriffsstellung in Richtung des Pfeils 60 verdreht werden, wobei die Aussparungen 56, 58 den Randbereich des Axiallagerteils übergreifen und so eine Sicherung gegen Herausfallen bilden. Solchenfalls kann die Haltezunge 20', wie in Figur 8 dargestellt, gegen ein Zurückdrehen gesichert sein, indem ein Steg 62 des Radiallagerteils in Richtung auf die Haltezunge 20' umgebogen ist.

## Patentansprüche

1. Gebaute Bundlagerschale mit einem halbschalenförmigen Radiallagerteil (2) und einem an einem axialen Randabschnitt (8) des Radiallagerteils (2) einseitig befestigbaren teilringscheibenförmigen Axiallagerteil (16) oder mit beidseits befestigbaren teilringscheibenförmigen Axiallagerteilen (16), wobei jedes Axiallagerteil (16) in radialer Ebene des Radiallagerteils (2) nach innen vorspringende Haltezungen (18, 20, 22) aufweist, die mit radialen Halteausnehmungen (10, 12, 14) in dem axialen Randabschnitt (8) des Radiallagerteils (2) in Eingriff bringbar sind, wobei wenigstens zwei Halteausnehmungen (10, 12, 14) als allseits umschlossene Halteöffnungen oder so ausgebildet sind, dass sich die Haltezungen (18, 20, 22) nicht in axialer Richtung in die Halteausnehmungen (10, 12, 14) einführen lassen, **dadurch gekennzeichnet, dass** die wenigstens zwei Halteausnehmungen (10, 12, 14) in konzentrischer Umfangsrichzung des Radiallagerteils (2) im wesentlichen dieselbe Länge (L_{R}) aufweisen wie diejenige (L_{A}) der Haltezungen (18, 20, 22) und die Haltezungen in radialer Richtung (26) durch den Scheitelpunkt der Bundlagerschale oder parallel hierzu (28) betrachtet hinterschnictfrei ausgebildet sind.

2. Gebaute Bundlagerschale nach Anspruch 1, **dadurch gekennzeichnet, dass** die Halteausnehmungen (10, 12, 14) in Umfangsrichtung von Wandbereichen (30, 32) des Radiallagerteils (2) begrenzt werden, die parallel zueinander verlaufen.

3. Gebaute Bundlagerschale nach Anspruch 1 oder 2, **dadurch gekennzeichnet, dass** die Halteausnehmungen (10, 12, 14) in einem Winkel von 25 bis 45 Grad, vorzugsweise von 25 bis 35 Grad zur Scheitellinie des Radiallagerteils (2) angeordnet sind.

4. Gebaute Bundlagerschale nach Anspruch 1, 2 oder 3, **dadurch gekennzeichnet, dass** zumindest eine der Haltezungen (20) auf ihrer axial äußeren Seite (38) eine Vertiefung (40) oder eine in axialer Richtung durchgehende Öffnung aufweist und dass nach dem Aneinanderfügen von Radiallagerteil (2) und Axiallagerteil (16) ein die betreffende Halteöffnung (12) axial begrenzender Stegabschnitt (42, 46, 48) des Radiallagerteils (2) in die Vertiefung (40) bzw. in die Öffnung hineindeformiert ist, so dass beide Teile unlösbar miteinander verbunden sind.

5. Gebaute Bundlagerschale nach einem oder mehreren der vorstehenden Ansprüche, **dadurch gekennzeichnet, dass** sämtliche Halteausnehmungen als allseits umschlossene Halteöffnungen oder so ausgebildet sind, ausgebildet sind, dass sich die Haltezungen (18, 20, 22) nicht in axialer Richtung in die Halteausnehmungen (10, 12, 14) einführen lassen.

## Claims

1. Assembled collar end bearing shell comprising a half-shell-shaped radial bearing part (2) and a graduated-ring-shaped thrust bearing part (16) fastenable at one side to an axial edge portion (8) of the radial bearing part (2) or comprising graduated-ring-shaped thrust bearing parts (16) fastenable at both sides, wherein each thrust bearing part (16) has fixing tongues (18, 20, 22), which project inwards in a radial plane of the radial bearing part (2) and are bringable into engagement with radial fixing recesses (10, 12, 14) in the axial edge portion (8) of the radial bearing part (2), wherein at least two fixing recesses (10, 12, 14) are configured as completely enclosed fixing openings or in such a way that the fixing tongues (18, 20, 22) may not be introduced in the axial direction into the fixing recesses (10, 12, 14), **characterised in that** the at least two fixing recesses (10, 12, 14) in the concentric peripheral direction of the radial bearing part (2) have substantially the same length (L_{R}) as the length (L_{A}) of the fixing tongues (18, 20, 22) and the fixing tongues, viewed in the radial direction (26) through the apex of the end collar bearing shell or parallel thereto (28), are constructed free of undercuts.

2. Assembled collar end bearing shell according to claim 1, **characterized in that** the fixing recesses (10, 12, 14) are delimited in the peripheral direction by wall regions (30, 32) of the radial bearing part (2), which extend parallel to one another.

3. Assembled collar end bearing shell according to claim 1 or 2, **characterized in that** the fixing recesses (10, 12, 14) are disposed at an angle of 25 to 45 degrees, preferably of 25 to 35 degrees to the apex line of the radial bearing part (2).

4. Assembled collar end bearing shell according to claim 1, 2 or 3, **characterized in that** at least one of the fixing tongues (20) in its axially outer side (38) has an indentation (40) or an axially extending through-opening and that, after radial bearing part (2) and thrust bearing part (16) have been joined together, a web portion (42, 46, 48) of the radial bearing part (2) that axially delimits the relevant fixing opening (12) is deformed into the indentation (40) and/or into the opening, so that both parts are permanently connected to one another.

5. Assembled collar end bearing shell according to one or more of the preceding claims, **characterized in that** all of the fixing recesses are configured as completely enclosed fixing openings or in such a way that the fixing tongues (18, 20, 22) may not be introduced in the axial direction into the fixing recesses (10, 12, 14).

## Revendications

1. Palier composé axial-radial avec un élément de palier radial (2) en forme de demi-coquille et un élément de palier axial (16) en forme de secteur de rondelle, apte à être fixé d'un côté à un bord axial (8) de l'élément de palier radial (2) ou avec des éléments de palier axiaux (16) en forme de secteurs de rondelle, aptes à être fixés des deux côtés, chaque élément de palier axial (16) présentant des languettes de retenue (18, 20, 22) qui dépassent vers l'intérieur dans le plan radial de l'élément de palier radial (2) et peuvent être mises en prise avec des évidements de retenue radiaux (10, 12, 14) ménagés dans le bord axial (8) de l'élément de palier radial (2), au moins deux évidements de retenue (10, 12, 14) étant agencés sous la forme d'ouvertures de retenue entourées de tous côtés ou de telle sorte que les languettes de retenue (18, 20, 22) ne peuvent être introduites axialement dans les évidements de retenue (10, 12, 14), **caractérisé en ce que** les deux évidements de retenue (10, 12, 14) ou plus ont, dans la direction circonférentielle concentrique de l'élément de palier radial (2), une longueur (L_{R}) sensiblement égale à la longueur (L_{A}) des languettes de retenue (18, 20, 22) et **en ce que** les languettes de retenue sont formées sans contre-dépouille vu dans la direction radiale (26) passant par le point de rebroussement du palier composé axial-radial ou parallèlement à celle-ci (28).

2. Palier composé axial-radial selon la revendication 1, **caractérisé en ce que** les évidements de retenue (10, 12, 14) sont limités dans la direction circonférentielle par des portions de paroi (30, 32) de l'élément de palier radial (2), qui sont parallèles entre elles.

3. Palier composé axial-radial selon la revendication 1 ou la revendication 2, **caractérisé en ce que** les évidements de retenue (10, 12, 14) forment un angle de 25 à 45 degrés, de préférence de 25 à 35 degrés avec la verticale au point de rebroussement de l'élément de palier radial (2).

4. Palier composé axial-radial selon l'une quelconque des revendications 1, 2 ou 3, **caractérisé en ce qu'**au moins une des languettes de retenue (20) présente, sur son côté axialement extérieur (38), une empreinte (40) ou un trou traversant dans la direction axiale et **en ce que**, après assemblage de l'élément de palier radial (2) et de l'élément de palier axial (16), une portion de barrette (42, 46, 48) de l'élément de palier radial, qui délimite axialement l'ouverture de retenue concernée (12), est introduite par déformation dans ladite empreinte (40) ou ledit trou, de sorte que les deux éléments sont reliés entre eux de manière inamovible.

5. Palier composé axial-radial selon l'une au moins des revendications précédentes, **caractérisé en ce que** tous les évidements de retenue sont agencés sous la forme d'ouvertures de retenue entourées de tous côtés ou de façon que les languettes de retenue (18, 20, 22) ne puissent pas être introduites axialement dans les évidements de retenue (10, 12, 14).
